# FASCICULE DE BREVET EUROPEEN

(11) **EP 3 182 726 B1**
(45) Date de publication et mention de la délivrance du brevet: **25.04.2018**
(21) Numéro de dépôt: 16198988.4
(22) Date de dépôt: 15.11.2016
(51) Int. Cl.: H04R 7/22, H04R 31/00

(54) **DISPOSITIF D'EMISSION SONORE**
SCHALLEMISSIONSVORRICHTUNG
SOUND TRANSMISSION DEVICE

(30) Priorité: 17.12.2015 FR 1562634
(43) Date de publication de la demande: 21.06.2017
(73) Titulaire: Delphi Technologies, Inc., Troy, MI 48007 (US)
(72) Inventeur: KAMON, Michal, 32-087 Zileonki (PL); TKACZYK, Grzegorz, 30-599 Krakow (PL)
(74) Mandataire: Robert, Vincent

(56) Documents cités:
- EP-A1- 2 840 804
- WO-A1-2011/125804
- WO-A2-03/009640
- CN-U- 204 046 799

## Description

### DOMAINE TECHNIQUE

La présente invention concerne un dispositif d'émission sonore destiné à équiper un véhicule automobile.

### ARRIERE-PLAN TECHNOLOGIQUE DE L'INVENTION

La présente invention concerne plus particulièrement le maintien d'une membrane acoustique d'un dispositif d'émission sonore.

Des dispositifs d'émission sonore destinés à équiper des véhicules et comprenant une membrane acoustique sont connus. Les sirènes de système d'alarme ou encore les dispositifs de générations de son pour véhicule hybrides ou électriques sont globalement équipés d'un boîtier comprenant une carte à circuits imprimés et une membrane acoustique associée à un moyen d'excitation de la membrane. Le volume libre du boîtier forme généralement une chambre acoustique qui permet une bonne transmission des vibrations de la membrane vers l'air à l'extérieur du dispositif d'émission sonore pour obtenir le niveau sonore recherché. Les étapes d'assemblage de tels dispositifs comprennent notamment l'assemblage du moyen de production du son comprenant la membrane acoustique et le moyen d'excitation de la membrane. Plusieurs méthodes permettant de rendre étanche la jonction entre le boîtier et la membrane sont connus. Des procédés tels que le collage de la membrane sur un rebord périphérique du boîtier, ou encore son maintien par pincement de la membrane entre une pièce additionnelle telle une bague et le rebord du boitier, la bague et le boitier étant soudé par vibration, permettent un assemblage étanche du dispositif. Néanmoins ces procédés ne sont pas satisfaisants sur le plan industriel. Les temps de cycle de production de tels dispositifs et également leurs coûts ne remplissent plus les contraintes actuelles du marché.

La présente invention vise à résoudre ces problèmes en proposant une solution simple et économique.

### RESUME DE L'INVENTION

Selon l'invention un dispositif d'émission sonore destiné à équiper un véhicule automobile comprend un boîtier comprenant une paroi axiale principale et une paroi de fond, la paroi axiale s'étendant suivant un axe vertical depuis la paroi de fond vers une ouverture opposée à la paroi de fond, une carte électronique, une membrane acoustique agencée dans l'ouverture du boîtier et qui est munie sur sa face inférieure d'un moyen d'excitation commandé par la carte électronique, un rebord périphérique qui est agencé dans l'ouverture, le bord périphérique externe de la membrane acoustique étant monté en appui sur le rebord périphérique, une paroi secondaire qui est venue de matière avec le rebord périphérique et qui est repliée vers le rebord périphérique de manière à retenir la membrane acoustique par pincement de son bord périphérique externe entre le rebord périphérique et la paroi secondaire.

De préférence, un connecteur électrique peut être raccordé électriquement à la carte électronique. Le rebord périphérique et/ou la paroi secondaire peuvent comporter au moins une protubérance en appui contre le bord périphérique externe de la membrane acoustique. Le rebord périphérique et/ou la paroi secondaire peuvent comporter au moins un évidement de forme complémentaire de la protubérance de manière qu'une partie du bord périphérique externe de la membrane acoustique soit plaquée dans l'évidement par la protubérance. L'évidement et la protubérance peuvent être de forme annulaire et ils peuvent s'étendre sur tout le périmètre de la paroi secondaire et du rebord périphérique.

La paroi secondaire et le rebord périphérique peuvent comporter plusieurs évidements et plusieurs protubérances de formes annulaires concentriques. La protubérance peut avoir un profil en section axiale de forme semi-circulaire ou triangulaire ou rectangulaire.

La surface du rebord périphérique interne peut également avoir un profil en section axiale formant une unique marche. Une partie du bord périphérique externe de la membrane acoustique peut être plaquée sur la surface de l'élément bas de la marche par la paroi secondaire, l'autre partie du bord périphérique externe de la membrane acoustique peut être plaquée sur la surface de l'élément haut de la marche par la paroi secondaire. La surface du rebord périphérique interne et la face interne de la paroi secondaire peuvent être reliées par une zone charnière de sorte à former une mâchoire sur la membrane acoustique. L'élément bas de la marche peut être adjacent à la paroi secondaire par la zone charnière.

La paroi secondaire et le rebord périphérique peuvent être venus de matière avec un couvercle rapporté qui est monté sur le boîtier pour en fermer l'ouverture. La paroi secondaire et le rebord périphérique peuvent être agencés sur la face inférieure du couvercle.

Selon l'invention, une méthode d'assemblage d'un dispositif d'émission sonore destiné à équiper un véhicule automobile comprend les étapes de:
disposer le bord périphérique externe d'une membrane acoustique sur un rebord périphérique du boîtier du dispositif d'émission sonore;
plier une paroi secondaire sensiblement cylindrique venue de matière avec le rebord périphérique sur le bord périphérique externe de la membrane acoustique de sorte à la maintenir écrasée contre le rebord périphérique du boîtier.

L'étape de pliage peut se faire par pliage à chaud de la paroi secondaire par vibration par une sonotrode.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
La figure 1 est une vue éclatée en perspective qui représente le dispositif d'émission sonore selon un premier mode de réalisation de l'invention.
La figure 2 est une vue en perspective et en coupe selon un axe transversal qui représente le dispositif d'émission sonore de la figure 1 assemblé.
La figure 3 est une vue schématique en coupe axiale de la zone de maintien de la membrane acoustique du dispositif d'émission sonore de la figure 2 lors d'une première étape d'assemblage avec la membrane.
La figure 4 est une vue schématique en coupe axiale de la zone de maintien de la membrane acoustique du dispositif d'émission sonore de la figure 2 lors d'une étape intermédiaire d'assemblage avec la membrane.
La figure 5 est une vue schématique en coupe axiale de la zone de maintien de la membrane acoustique du dispositif d'émission sonore de la figure 2 lors d'une dernière étape d'assemblage avec la membrane.
La figure 6 est une vue éclatée en perspective qui représente le dispositif d'émission sonore selon un deuxième mode de réalisation de l'invention.
La figure 7 est une vue en perspective de l'assemblage de la membrane acoustique avec le couvercle du dispositif d'émission sonore de la figure 6.
La figure 8 est une vue en perspective et en coupe axiale suivant le plan 8-8 qui représente le couvercle de la figure 7.
La figure 9 est une vue schématique en coupe transversale de la zone de maintien de la membrane acoustique du couvercle de la figure 7 selon une première variante.
La figure 10 est une vue schématique en coupe transversale de la zone de maintien de la membrane acoustique du couvercle de la figure 7 selon une deuxième variante.
La figure 11 est une vue schématique en coupe transversale de la zone de maintien de la membrane acoustique du couvercle de la figure 7 selon une troisième variante lors d'une première étape d'assemblage avec la membrane.
La figure 12 est une vue schématique en coupe transversale de la zone de maintien de la membrane acoustique du couvercle de la figure 7 selon la troisième variante lorsque l'assemblage de la membrane est terminé.

### DESCRIPTION DES MODES DE REALISATION

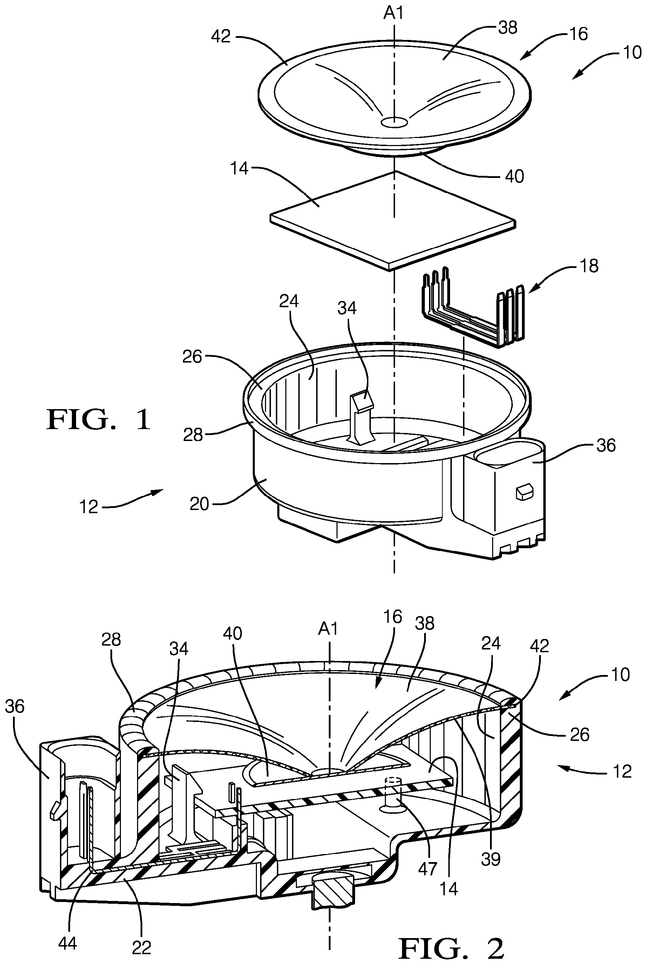

Selon la figure 1, un dispositif d'émission sonore 10 destiné à équiper un véhicule automobile est représenté avant son assemblage. Le dispositif 10 comporte un boîtier 12 recevant les différents composants du dispositif, en particulier un circuit de commande 14, un ensemble de production de son 16 et des moyens de raccordement électrique 18.

Dans la suite de la description, on utilisera à titre non limitatif une orientation verticale suivant un axe A1 du boîtier 12 orienté de bas en haut conformément à la figure 1. Bien entendu le boîtier 12 peut être installé dans le véhicule dans diverses positions et non exclusivement selon la figure 1.

Le boîtier 12 est formé d'une paroi axiale 20 sensiblement cylindrique qui s'étend ici suivant l'axe vertical A1, depuis une paroi de fond 22 transversale, vers une ouverture supérieure 24. L'ouverture supérieure 24 est de préférence substantiellement circulaire. La paroi axiale 20 du boîtier 12 comporte un rebord périphérique externe 26 agencé dans l'ouverture supérieure 24. Le rebord périphérique 26 tel que représenté, occupe toute la périphérie de la paroi axiale 20. Une paroi secondaire axiale sensiblement cylindrique 28 est agencée sur toute la périphérie externe du rebord périphérique 26. La paroi secondaire 28 est venue de matière avec le rebord périphérique externe 26.

La paroi de fond 22 comporte un clip de maintien 34, réalisé venu de matière avec la paroi de fond 22, qui permet de retenir axialement le circuit de commande 14 dans le boîtier 12. Un connecteur électrique 36 peut être agencé sur l'extérieur du boîtier 12 afin de raccorder le dispositif d'émission sonore 10 au réseau électrique du véhicule. On note que le boîtier est de préférence de matière plastique de la famille des polytéréphtalates de butylène (PBT) ou de la famille des polyamides 6 (PA6) pouvant contenir des fibres de verre.

L'ensemble de production du son 16 comporte ici une membrane 38, ou diaphragme, associée à un moyen électrique d'excitation 40, tel qu'un élément piézoélectrique, électromagnétique, électromécanique ou analogue permettant la production de vibrations sonores. La membrane 38 a globalement la forme d'un disque souple incurvé vers son centre et vers le bas. La membrane 38 comporte un bord périphérique externe 42 permettant d'être en appui sur le rebord périphérique externe 26. Le bord périphérique externe de la membrane 42 est une partie du disque s'étendant du bord extérieur du disque vers l'intérieur de celui-ci. Le bord périphérique externe de la membrane 42 est de préférence une portion extérieure du disque souple de forme plane. Le moyen électrique d'excitation 40 est de préférence fixé sur la face inférieure 39 de la membrane 38.

De préférence, le circuit de commande 14 est une carte à circuits imprimés munie de composants électroniques en surface et de moyens de raccordement électrique au moyen électrique d'excitation 40 et au connecteur électrique 36.

Les moyens de raccordement électrique 18 sont prévus afin de pouvoir raccorder le circuit de commande 14 au connecteur électrique 36. Les moyens de raccordement électrique 18 comportent des languettes conductrices 44. Chaque languette conductrice 44 est ici réalisée en métal par découpage et pliage.

Selon la figure 2, le dispositif d'émission sonore 10 destiné à équiper un véhicule automobile est représenté assemblé. Les languettes conductrices 44 des moyens de raccordement électrique 18 sont surmoulées dans la paroi de fond 22 du boîtier 12 de manière à raccorder électriquement le connecteur 36 au circuit de commande 14. Le circuit de commande 14 est monté axialement dans le boîtier 12, par-dessus les moyens de raccordement électrique 18, en venant en appui axial contre des surfaces d'appui 47 associées formées par moulage sur la paroi de fond 22 du boîtier 12. Le clip de maintien 34 retient axialement le circuit de commande 14 dans le boîtier 12.

Le circuit de commande 14 est relié au connecteur 36 de manière à échanger des signaux électriques avec un système électronique (non représenté) de contrôle de l'état du véhicule. Plus particulièrement, le circuit de commande 14 reçoit des signaux de commande de déclenchement du dispositif d'émission sonore 10. En réponse, le circuit de commande 14 génère un signal électrique en direction de l'élément électromécanique de production de vibrations sonores appartenant à l'ensemble de production du son 16.

Le moyen électrique d'excitation 40 est agencé entre la membrane 38 et la face supérieure du circuit de commande 14 et il est connecté au circuit de commande 14 par une technologie de montage en surface. Le bord périphérique externe 42 de la membrane 38 est monté pincé axialement entre la paroi secondaire du boîtier 28 et le rebord périphérique externe 26 du boîtier 12. La paroi secondaire 28 avant assemblage qui était sensiblement axiale a donc subi une déformation afin de pouvoir maintenir le bord périphérique externe de la membrane 42 écrasé contre le rebord périphérique externe 26 du boîtier 12.

On note que la membrane 38 est réalisée dans une matière plastique, par exemple choisie parmi le PEN (polyéthylène naphthalate), le PET (polyéthylène téréphtalate), ou le PP (polypropylène), cette matière plastique étant prévue pour résister à des projections de liquide tel que de l'eau. Ceci permet l'agencement du dispositif d'émission sonore 10 dans le compartiment moteur du véhicule où elle peut être exposée à des projections variées.

L'ouverture supérieure 24 du boîtier 12 est fermée par l'ensemble de production de son 16.

Alternativement, la membrane acoustique 38 peut avoir la forme d'un disque souple plat. Le dispositif d'émission sonore 10 peut également comprendre des batteries d'alimentation lui permettant un fonctionnement non dépendant de la batterie du véhicule. Le dispositif d'émission sonore 10 peut également comprendre un capot supérieur permettant de protéger la membrane 38 de toute agression extérieure.

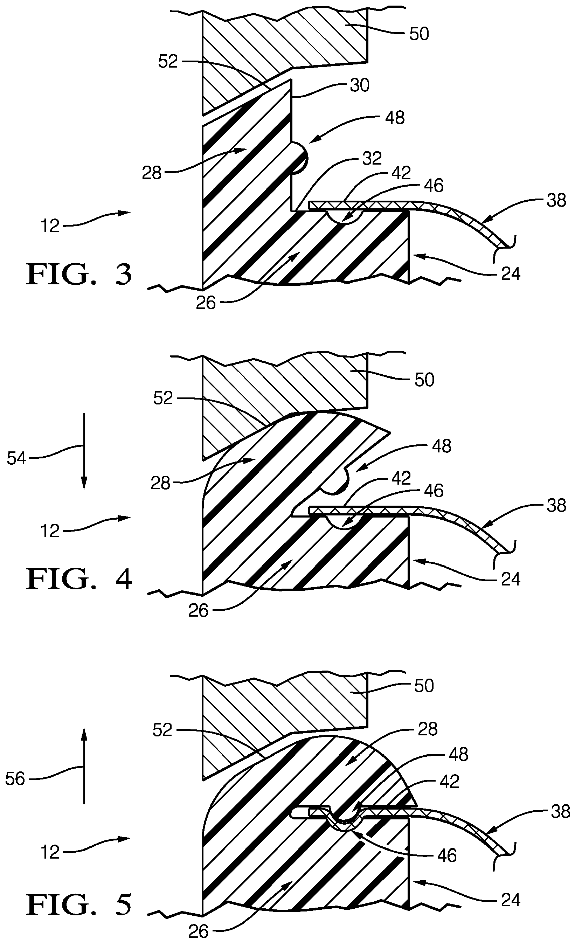

Selon les figures 3, 4 et 5, le boîtier 12 du dispositif sonore 10 décrit ci-dessus est représenté schématiquement en coupe axiale. Plus particulièrement la zone de maintien de la membrane acoustique 38 est représentée selon des étapes d'assemblage de la membrane. Les figures 3, 4 et 5 représentent successivement les étapes permettant le maintien de la membrane acoustique 38 dans l'ouverture supérieure du boîtier 24.

Selon la figure 3 la zone de maintien de la membrane acoustique 38 est formée dans le boîtier 12 du dispositif d'émission sonore 10. La zone de maintien de la membrane acoustique 38 est formée par le rebord périphérique externe 26 de la paroi axiale du boîtier et par la paroi secondaire 28 axiale substantiellement cylindrique. La paroi secondaire 28 est formée sur toute la périphérie externe du rebord périphérique 26. Le bord périphérique externe 42 de la membrane 38 est disposé en appui sur le rebord périphérique externe du boîtier 26. Le bord périphérique externe 42 de la membrane 38 vient recouvrir en partie la surface du rebord périphérique 32. De préférence une partie du bord périphérique externe de la membrane 42 vient recouvrir en totalité un évidement 46 agencé sur la surface du rebord périphérique externe 32. Cet évidement 46 est une rainure annulaire agencée sur tout le périmètre du rebord périphérique 26. L'évidement 46 a un profil en section axiale de forme semi-circulaire. La paroi secondaire 28 est munie sur sa face interne 30 d'une protubérance 48 de forme complémentaire de l'évidement 46 agencée sur la surface du rebord périphérique 32.

Lors de l'assemblage de la membrane acoustique 38 sur le boîtier 12, un outil de pliage à chaud 50 est disposé axialement au-dessus en vis à vis de la face supérieure de la paroi secondaire 52. De préférence, cet outil de pliage à chaud 50 permet le pliage de la paroi secondaire 28 par vibration. De préférence, l'outil de pliage 50 est une sonotrode.

Selon la figure 4, l'outil de pliage à chaud 50, après avoir été disposé contre la face supérieure de la paroi secondaire 52, appuie vers le bas selon le sens illustré par la flèche 54. La chaleur transmise à la paroi secondaire 52 ainsi que la force d'appui vers le bas 54, permet à l'outil 50 de plier la paroi secondaire 28 vers le rebord périphérique externe 26 du boîtier 12.

Selon la figure 5, le pliage de la paroi secondaire 28 est terminé lorsque la partie du bord périphérique externe de la membrane 42 qui recouvrait précédemment l'évidement est maintenue écrasée entre l'évidement 46 et la protubérance 48. Cela signifie que l'agencement de l'évidement 46 et de la protubérance 48 est tel que lorsque l'étape de pliage est finie, la protubérance 48 est agencée dans l'évidement 46 de sorte à plaquer une partie de la membrane acoustique 38 dans l'évidement 46. L'outil de pliage à chaud 50 est ensuite déplacé vers le haut, selon le sens de la flèche illustrée 56, de sorte à ne plus être en contact avec la paroi secondaire 28.

De façon alternative, le dispositif ne comprend pas d'évidement 46 de sorte que seule la protubérance 48 agencée soit sur la paroi secondaire 28, soit sur le rebord périphérique externe 26 du boîtier 12 vient écraser une partie du bord périphérique externe de la membrane 42 contre la paroi non équipée de la protubérance ou contre le rebord périphérique externe 26 du boîtier 12 non équipé de la protubérance.

De façon également alternative, la paroi secondaire 28 et le rebord périphérique externe 26 du boîtier 12 ne comprennent ni protubérance 48, ni évidement 46 de sorte que lorsque la paroi secondaire 28 et le rebord périphérique externe 26 du boîtier 12 sont repliés l'un vers l'autre, le bord périphérique de la membrane 42 se trouve maintenu pincé entre les deux.

Ce mode de réalisation de maintien de la membrane acoustique 38 permet de simplifier son assemblage, notamment en référence au moyens connus d'assemblage tels que le collage de la membrane, mais également le pincement de la membrane entre le boîtier et une pièce supplémentaire telle un couvercle ou un anneau. Cette méthode d'assemblage par pliage à chaud permet de fixer également la membrane 38 contre la paroi du boîtier 20 de manière étanche.

Alternativement l'évidement 46 peut être une rainure agencée sur toute la périphérie de la face interne de la paroi secondaire 30. La protubérance 48 formant la forme complémentaire de la rainure est une nervure. La nervure est agencée sur tout le périmètre du rebord périphérique 26. Plusieurs rainures annulaires 46 et leur forme complémentaire 48 peuvent être agencées sur la périphérie de la face interne de la paroi secondaire 30 et sur tout le périmètre du rebord périphérique 26. L'évidement 46 peut également être une rainure agencée sur une partie du périmètre du rebord périphérique 26. L'évidement 46 peut avoir un profil en section axiale de forme géométrique différente que semi-circulaire, notamment rectangulaire ou formant un creux en forme de 'V' dite forme triangulaire. Dans tous les cas de forme géométrique, la protubérance 48 aura les caractéristiques de forme lui permettant de s'agencer dans l'évidement 46 de sorte à maintenir la membrane acoustique 38 en plaquant le bord périphérique externe 42 de la membrane acoustique 38.

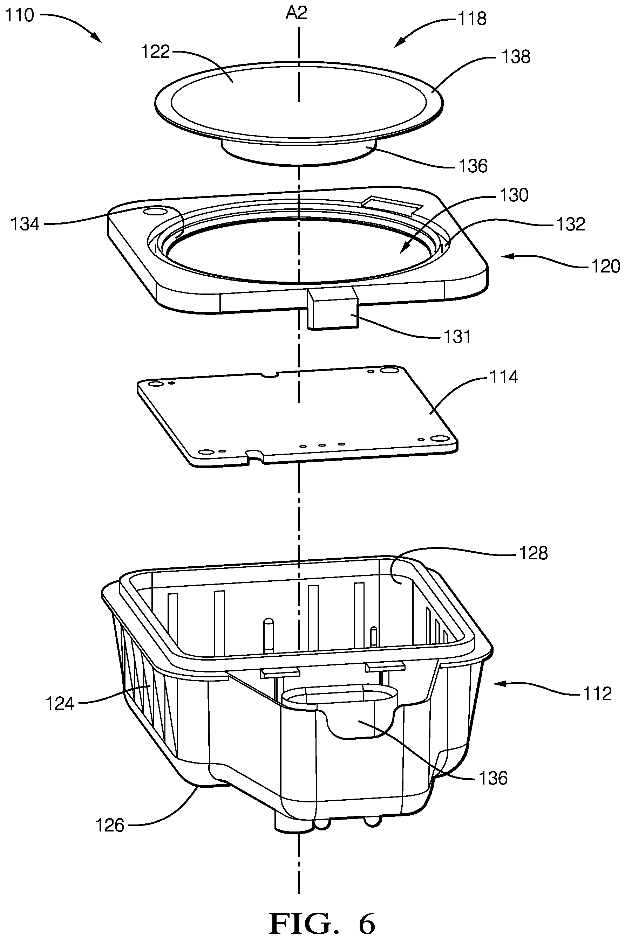

Selon la figure 6, un mode alternatif de réalisation d'un dispositif d'émission sonore 110 destiné à équiper un véhicule automobile est représenté avant son assemblage. Comme le dispositif présenté selon la figure 1, le dispositif 110 comporte un boîtier 112 recevant les différents composants du dispositif, en particulier un circuit de commande 114, un ensemble de production de son 118 et des moyens de raccordement électrique (non représentés). De plus, le boîtier 112 comporte un couvercle 120 rapporté permettant de maintenir la membrane acoustique 122 de l'ensemble de production du son 118 Les principes de fonctionnement et de raccordement électrique entre les différents éléments électroniques de ce mode de réalisation restent similaires à celui décrit précédemment.

Le boîtier 112 est formé d'une paroi axiale 124 sensiblement cylindrique qui s'étend ici suivant l'axe vertical A2, depuis une paroi de fond 126 transversale, vers une ouverture supérieure 128. L'ouverture supérieure 128 est substantiellement rectangulaire.

Le couvercle 120 comporte une surface plane de forme substantiellement rectangulaire prévue pour fermer l'ouverture supérieure 128 du boîtier 112. De préférence, un clip 131 de maintien du couvercle 120 sur la paroi axiale du boîtier 124 est agencé sur la périphérie extérieure du couvercle 120.

Alternativement, l'ouverture supérieure 128 du boîtier ainsi que le couvercle 120 peuvent avoir une forme géométrique autre que rectangulaire, par exemple des formes circulaires ou de type polygonal sont envisageables

Le couvercle 120 comprend un trou traversant 130 qui est de forme substantiellement circulaire. Le trou traversant 130 comporte un rebord périphérique interne 132. Le rebord périphérique interne 132 tel que représenté, occupe toute la périphérie du trou traversant 130. Une paroi secondaire axiale sensiblement cylindrique 134 est agencée sur toute la périphérie externe du rebord périphérique 132. La paroi secondaire axiale sensiblement cylindrique 134 est venue de matière avec le rebord périphérique interne 132 du trou traversant 130. Un connecteur électrique 136 est agencé sur l'extérieur du boîtier 112 afin de raccorder le dispositif d'émission sonore 110 au réseau électrique du véhicule.

L'ensemble de production du son 118 comporte ici une membrane 122, ou diaphragme, associée à un moyen électrique d'excitation 136, tel qu'un élément piézoélectrique, électromagnétique, électromécanique ou analogue. La membrane 122 a globalement la forme d'un disque souple incurvé vers son centre et vers le bas. La membrane 122 peut également avoir globalement la forme d'un disque plat. La membrane 122 comporte un bord périphérique externe 138 permettant d'être disposé en appui sur le rebord périphérique interne 132 du trou traversant 130 du couvercle 120.

Le couvercle 120 peut avoir diverses formes géométriques, de sorte à permettre son assemblage avec le boîtier quelque soit la forme de l'ouverture du boîtier, la membrane acoustique 122 étant disposée en appui sur le rebord périphérique interne 132 du trou traversant 130 du couvercle 120.

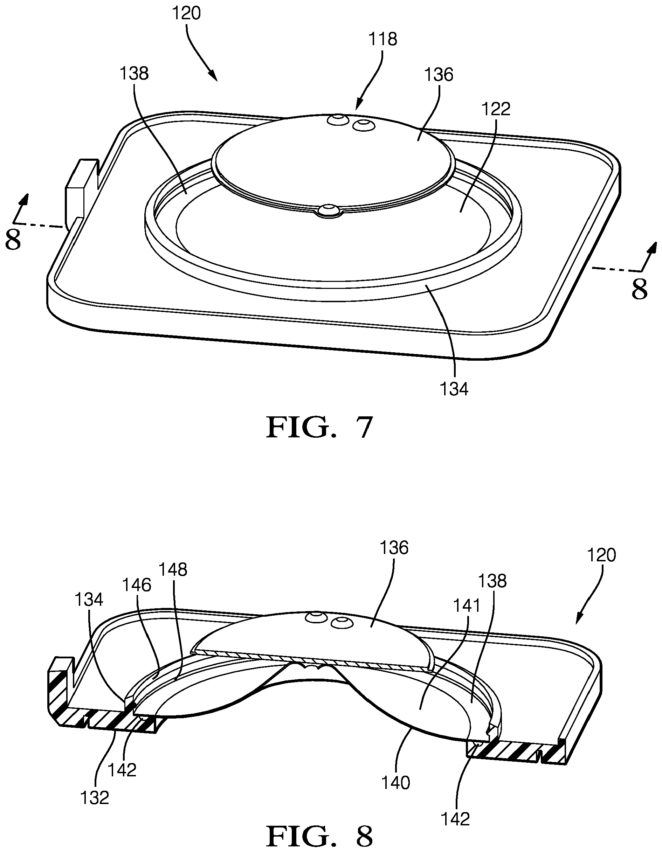

Selon les figures 7 et 8, l'ensemble de production du son 118 est disposé en appui sur le rebord périphérique interne 132 du trou traversant 130 du couvercle 120. A titre non limitatif, il a été illustré un mode de réalisation pour lequel la face supérieure de la membrane 140, c'est-à-dire la face qui est disposée vers l'air à l'extérieur de l'ensemble de production du son 118 lorsque celui-ci est assemblé, est en appui sur le rebord périphérique interne 132 du trou traversant 130 du couvercle 120. Cette disposition permet de renforcer l'étanchéité du dispositif 110 lorsque la membrane 122 est maintenue écrasée entre le rebord périphérique interne 132 du trou traversant 130 du couvercle 120 et la paroi secondaire 134 lorsque celle-ci est pliée selon le procédé illustré par les figures 3, 4 et 5. Il est à noter que selon ce mode de réalisation, de préférence, le moyen électrique d'excitation 136 est fixé sur la face inférieure 141 de la membrane 122, c'est à dire sur la face de la membrane 122 qui fait face au circuit de commande 114.

Selon la figure 8, le bord périphérique externe 138 de la face supérieure de la membrane 140 recouvre une rainure annulaire 142 agencée sur tout le périmètre du rebord périphérique 132 interne du trou traversant 130 du couvercle 120. La paroi secondaire 134 est munie sur sa face interne 146 d'une nervure 148 de forme complémentaire à la rainure 142 agencée sur la surface du rebord périphérique interne 150. Lorsque l'ensemble de production du son 118 est assemblé avec le couvercle du boîtier 120, la membrane 122 est maintenue écrasée par la nervure 148 dans la rainure 142 lorsque la paroi secondaire 134 du trou traversant 130 du couvercle 120 est pliée selon le procédé illustré par les figures 3, 4 et 5.

Alternativement, la membrane acoustique 122 peut être assemblée dans le couvercle 120 sans être fixée au moyen électrique d'excitation 136.

La rainure 142 et la nervure 148 peuvent avoir des formes géométriques identiques aux formes décrites au travers du mode de réalisation illustré par les figures 1, 2, 3.

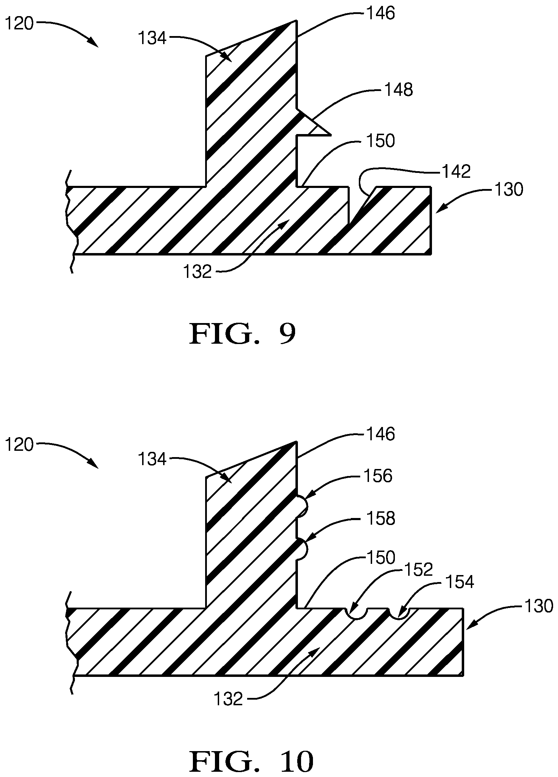

Selon la figure 9, et la figure 10, une coupe axiale du couvercle 120 décrit au travers des figures 6, 7 et 8 est représentée schématiquement, et plus particulièrement la zone de maintien de la membrane acoustique 122 est représentée avant l'étape d'assemblage avec la membrane 122.

Selon la figure 9, la rainure 142 annulaire sur le rebord périphérique interne 132 du trou traversant 130 du couvercle 120 peut avoir un profil en coupe axiale en forme de 'V'. La nervure 148 est donc agencée sur la face interne 146 de la paroi secondaire 134 du trou traversant 130 du couvercle 120.

Selon la figure 10, deux rainures 152, 154 de profil en coupe axiale de forme semi-circulaire sont agencées sur le rebord périphérique interne 132 du trou traversant 130 du couvercle 120. Les nervures 156, 158 ayant un profil en coupe axiale de forme semi-circulaire sont donc agencées sur la paroi secondaire 134 du trou traversant 130 du couvercle 120. Cette agencement permet de rendre encore plus robuste le maintien de la membrane acoustique 122 lorsque celle-ci est maintenue plaquée dans les deux rainures 152, 154 par les deux nervures 156, 158 de la paroi secondaire 134 pliée selon le processus décrit au travers des figures 3, 4 et 5. Alternativement, plusieurs rainures de profil en coupe axiale de forme différente peuvent être agencées sur le rebord périphérique interne 132 du trou traversant 130 du couvercle 120.

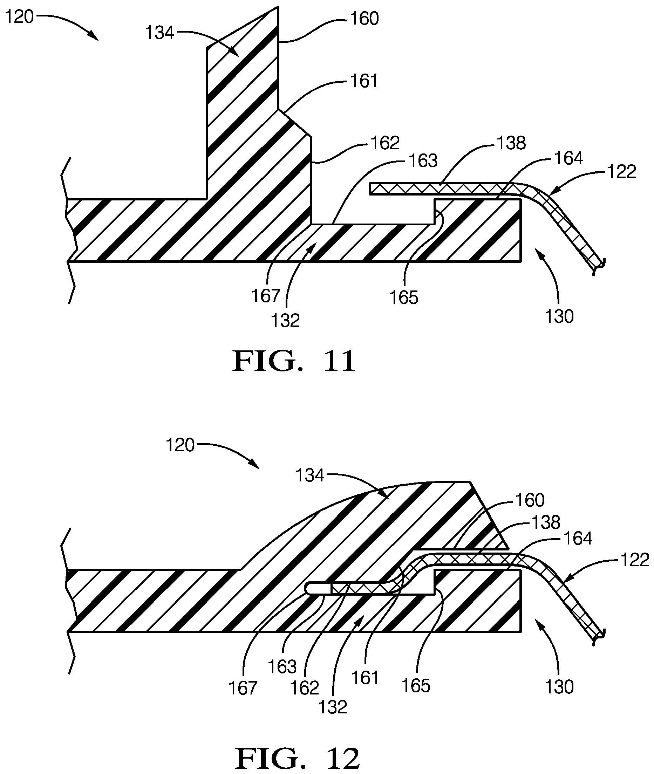

Selon les figures 11 et 12, le couvercle 120 du dispositif sonore 110 décrit selon la figure 7 est représenté schématiquement en coupe axiale. Plus particulièrement la zone de maintien de la membrane acoustique 122 est représentée selon des étapes d'assemblage de la membrane. Les figures 11 et 12 représentent respectivement une étape d'agencement de la membrane 122 avant son assemblage définitif et une étape pour laquelle la membrane 122 est définitivement maintenue par le couvercle 120 selon une troisième variante d'assemblage.

Selon la figure 11, la zone de maintien de la membrane est représentée avant pliage de la paroi secondaire 134. La paroi secondaire 134 comporte sur sa face interne trois sections, une première section 162 s'étendant axialement depuis le rebord périphérique 132 jusqu'à une deuxième section 161 formant un décrochement oblique orienté vers l'extérieure du couvercle 120, et reliant la première section 162 à une troisième section 160 orientée axialement suivant l'axe transversale A2. La surface 150 du rebord périphérique interne 132 du trou traversant 130 a un profil en coupe axial formant une unique marche en équerre à la façon d'un escalier. La marche en équerre comporte une surface de l'élément bas 163 de la marche, une surface de l'élément haut 164 de la marche et une surface de l'élément en équerre 165 formants jonction entre l'élément bas et l'élément haut de la marche. La surface de l'élément bas 163 est reliée à la première section 162 de la paroi secondaire 134 par une zone charnière 167 de sorte à être adjacente à la première section 162. L'élément bas de la marche et la première section 162 de la paroi secondaire forme respectivement un évidement du rebord périphérique 132 et une protubérance de la paroi secondaire 162. La forme géométrique de la surface du rebord périphérique interne 132 et la forme géométrique de la paroi secondaire 134 sont substantiellement complémentaires de sorte que lorsque la paroi secondaire 134 est repliée sur le rebord périphérique 132, la première section 162 de la paroi secondaire s'agence de façon quasi complémentaire vers l'élément bas de la marche.

Le bord périphérique externe 138 de la membrane 122 est agencé sur la surface de l'élément haut 164 de la marche et recouvre partiellement la surface de l'élément bas 163 de la marche de sorte à pouvoir être plaquée aussi bien sur la surface de l'élément bas de la marche 163 que sur la surface de l'élément haut de la marche 164 respectivement par la première section 162 et par la troisième section 160 de la paroi secondaire 134.

Alternativement, la deuxième section 161 de la face interne peut former un décrochement substantiellement perpendiculaire orienté vers l'extérieure du couvercle 120. Egalement la surface de l'élément de jonction 165 de la marche peut être oblique. Egalement alternativement, l'élément haut de la marche et l'élément bas de la marche peuvent être agencée façon inverse, de sorte que la forme complémentaire formée par la paroi secondaire 134 est agencée de sorte que la première section 162 s'étend axialement depuis le rebord périphérique 132 jusqu'à la deuxième section 161 formant un décrochement oblique orienté vers l'intérieur du couvercle 120 et reliant la première section 162 à la troisième section 160.

Selon la figure 12, la zone de maintien de la membrane est représentée après pliage de la paroi secondaire 134. La surface 150 du rebord périphérique interne 132 et la face interne 146 de la paroi secondaire 134 sont reliées par une zone charnière 167 de sorte à former une mâchoire sur la membrane acoustique 38, 122. La face interne 146 de la paroi secondaire 134 plaque le bord périphérique externe 42, 138 de la membrane acoustique 38, 122 sur la surface 150 du rebord périphérique interne 132. L'élément bas 163 de la marche est relié à la paroi secondaire 134 par la zone charnière 167. Une partie du bord périphérique externe 42, 138 de la membrane acoustique 38, 122 est plaquée sur la surface de l'élément bas 163 de la marche par la paroi secondaire 134, l'autre partie du bord périphérique externe 42, 138 de la membrane acoustique 38, 122 est plaquée sur la surface de l'élément haut 163 de la marche par la paroi secondaire 134.

L'ensemble des modes de réalisation décrit ci-dessus ne se limite pas dans certains cas au maintien de la membrane acoustique dans l'ouverture du boîtier du premier mode de réalisation du dispositif d'émission sonore et dans d'autres cas dans le trou traversant du couvercle décrit dans le deuxième mode de réalisation du dispositif d'émission sonore. Les dispositifs de maintiens de la membrane acoustique décrits ci-dessus, permettent le maintien de la membrane dans le premier et dans le deuxième mode de réalisation du dispositif d'émission sonore.

## Revendications

1. Dispositif d'émission sonore (10, 110) destiné à équiper un véhicule automobile comprenant:
- un boîtier (12, 112) comprenant une paroi axiale principale (20, 124) et une paroi de fond (22), la paroi axiale (20) s'étendant suivant un axe vertical (A1) depuis la paroi de fond (22, 126) vers une ouverture (24, 128) opposée à la paroi de fond (22, 126);
- un circuit de commande (14, 114);
- une membrane acoustique (38, 122) agencée dans l'ouverture (24, 128) du boîtier (12, 112) et qui est munie sur sa face inférieure (39, 141) d'un moyen d'excitation (40, 136) commandé par le circuit de commande (14, 114) ;
**caractérisé en ce que** le boîtier (12, 112) comprend de plus :
- un rebord périphérique (26, 132) qui est agencé dans l'ouverture (24, 128), le bord périphérique externe (42, 138) de la membrane acoustique (38, 122) étant monté en appui sur le rebord périphérique (26, 132);
- une paroi secondaire (28, 134) qui est venue de matière avec le rebord périphérique (26, 132) et qui est repliée vers le rebord périphérique (26, 132) de manière à retenir la membrane acoustique (38, 122) par pincement de son bord périphérique externe (42, 138) entre le rebord périphérique (26, 132) et la paroi secondaire (28, 132).

2. Dispositif d'émission sonore (10, 110) selon la revendication précédente, **caractérisé en ce que** le rebord périphérique (26, 132) et/ou la paroi secondaire (28, 132) comportent au moins une protubérance (48, 148, 158) en appui contre le bord périphérique externe (42, 138) de la membrane acoustique (38, 122).

3. Dispositif d'émission sonore (10, 110) selon la revendication précédente, **caractérisé en ce que** le rebord périphérique (26, 132) et/ou la paroi secondaire (28, 132) comportent au moins un évidement (46, 142, 152) de forme complémentaire de la protubérance (48, 148, 158) de manière qu'une partie du bord périphérique externe (42, 138) de la membrane acoustique (38, 122) soit plaquée dans l'évidement (46, 142, 152) par la protubérance (48, 148, 158).

4. Dispositif d'émission sonore (10, 110) selon la revendication précédente, **caractérisé en ce que** l'évidement (46, 142, 152) et la protubérance (48, 148, 158) sont de forme annulaire et ils s'étendent sur tout le périmètre de la paroi secondaire (28, 134) et du rebord périphérique (26, 132).

5. Dispositif d'émission sonore (10, 110) selon la revendication précédente, **caractérisé en ce que** la paroi secondaire (28, 134) et le rebord périphérique (26, 132) comportent plusieurs évidements (46, 142, 152, 154) et plusieurs protubérances (48, 148, 156, 158) de formes annulaires concentriques.

6. Dispositif d'émission sonore (10, 110) suivant l'une quelconque des revendications 2 à 5, **caractérisé en ce que** la protubérance (48, 148, 156, 158) a un profil en section axiale de forme semi-circulaire ou triangulaire ou rectangulaire.

7. Dispositif d'émission sonore (10, 110) suivant l'une quelconque des revendications 1 à 5, **caractérisé en ce que** :
- la surface (150) du rebord périphérique interne (132) a un profil en section axiale formant une unique marche ;
- une partie du bord périphérique externe (42, 138) de la membrane acoustique (38, 122) est plaquée sur la surface de l'élément bas (163) de la marche par la paroi secondaire (134), l'autre partie du bord périphérique externe (42, 138) de la membrane acoustique (38, 122) est plaquée sur la surface de l'élément haut (163) de la marche par la paroi secondaire (134).

8. Dispositif d'émission sonore (10, 110) suivant l'une quelconque des revendications précédentes, **caractérisé en ce que** la paroi secondaire (28, 134) et le rebord périphérique (26, 132) sont venus de matière avec un couvercle (120) rapporté qui est monté sur le boîtier (12, 112) pour en fermer l'ouverture (24, 128).

9. Dispositif d'émission sonore (10) suivant la revendication précédente, **caractérisé en ce que** la paroi secondaire (28, 134) et le rebord périphérique (26, 132) sont agencés sur la face inférieure du couvercle (120).

10. Méthode d'assemblage d'un dispositif d'émission sonore destiné à équiper un véhicule automobile selon l'une quelconque des revendications 1 à 9 comprenant les étapes de:
- disposer le bord périphérique externe (42, 138) d'une membrane acoustique (38, 122) sur un rebord périphérique (26, 132) du boîtier (12, 112) du dispositif d'émission sonore (10, 110);
- plier une paroi secondaire (28, 134) sensiblement cylindrique venue de matière avec le rebord périphérique (26, 132) sur le bord périphérique externe (42, 138) de la membrane acoustique (38, 122) de sorte à la maintenir pincée contre le rebord périphérique du boîtier (26).

11. Méthode d'assemblage selon la revendication précédente **caractérisée en ce que** l'étape de pliage se fait par pliage à chaud de la paroi secondaire (28, 134) par vibration par une sonotrode (50).

## Patentansprüche

1. Schallemissionsvorrichtung (10, 110), die dazu bestimmt ist, ein Kraftfahrzeug damit auszustatten, enthaltend:
- ein Gehäuse (12, 112) mit einer axial verlaufenden Hauptwand (20, 124) und einer Bodenwand (22), wobei die axial verlaufende Wand (20) sich entlang einer vertikalen Achse (A1) von der Bodenwand (22, 126) ausgehend zu einer Öffnung (24, 128) erstreckt, die der Bodenwand (22, 126) entgegengesetzt ist;
- eine Steuerschaltung (14, 114);
- eine akustische Membran (38, 122), die in der Öffnung (24, 128) des Gehäuses (12, 112) angeordnet ist und an ihrer Unterseite (39, 141) mit einer Anregungseinrichtung (40, 136) versehen ist, die über die Steuerschaltung (14, 114) gesteuert wird;
**dadurch gekennzeichnet, dass** das Gehäuse (12, 112) ferner enthält:
- einen Umfangsrand (26, 132), der in der Öffnung (24, 128) angeordnet ist, wobei die äußere Umfangsrandleiste (42, 138) der akustischen Membran (38, 122) in Anlage an dem Umfangsrand (26, 132) angebracht ist;
- eine Nebenwand (28, 134), die stoffschlüssig mit dem Umfangsrand (26, 132) ausgebildet und zum Umfangsrand (26, 132) hin umgebogen ist, so dass sie die akustische Membran (38, 122) durch Einklemmen ihrer äußeren Umfangsrandleiste (42, 138) zwischen dem Umfangsrand (26, 132) und der Nebenwand (28, 132) festhält.

2. Schallemissionsvorrichtung (10, 110) nach dem vorangehenden Anspruch,
**dadurch gekennzeichnet, dass**
der Umfangsrand (26, 132) und/oder die Nebenwand (28, 132) zumindest einen Vorsprung (48, 148, 158) aufweisen, der in Anlage an der äußeren Umfangsrandleiste (42, 138) der akustischen Membran (38, 122) ist.

3. Schallemissionsvorrichtung (10, 110) nach dem vorangehenden Anspruch,
**dadurch gekennzeichnet, dass**
der Umfangsrand (26, 132) und/oder die Nebenwand (28, 134) zumindest eine Ausnehmung (46, 142, 152) mit zum Vorsprung (48, 148, 158) komplementärer Form aufweisen, so dass ein Teil der äußeren Umfangsrandleiste (42, 138) der akustischen Membran (38, 122) über den Vorsprung (48, 148, 158) in die Ausnehmung (46, 142, 152) gedrückt wird.

4. Schallemissionsvorrichtung (10, 110) nach dem vorangehenden Anspruch,
**dadurch gekennzeichnet, dass**
die Ausnehmung (46, 142, 152) und der Vorsprung (48, 148, 158) ringförmig sind und sich über den gesamten Umfang der Nebenwand (28, 134) und des Umfangsrandes (26, 132) erstrecken.

5. Schallemissionsvorrichtung (10, 110) nach dem vorangehenden Anspruch,
**dadurch gekennzeichnet, dass**
die Nebenwand (28, 134) und der Umfangsrand (26, 132) mehrere Ausnehmungen (46, 142, 152, 154) und mehrere Vorsprünge (48, 148, 156, 158) mit konzentrischen Ringformen enthalten.

6. Schallemissionsvorrichtung (10, 110) nach einem der Ansprüche 2 bis 5,
**dadurch gekennzeichnet, dass**
der Vorsprung (48, 148, 156, 158) im Axialschnitt ein halbkreisförmiges oder dreieckförmiges oder rechteckförmiges Profil hat.

7. Schallemissionsvorrichtung (10, 110) nach einem der Ansprüche 1 bis 5, **dadurch gekennzeichnet, dass**
- die Oberfläche (150) des inneren Umfangsrands (132) im Axialschnitt ein eine einzelne Stufe bildendes Profil hat,
- ein Teil der äußeren Umfangsrandleiste (42, 138) der akustischen Membran (38, 122) über die Nebenwand (134) an die Oberfläche des unteren Elements (163) der Stufe gedrückt wird und der andere Teil der äußeren Umfangsrandleiste (42, 138) der akustischen Membran (38, 122) über die Nebenwand (134) an die Oberfläche des oberen Elements (163) der Stufe gedrückt wird.

8. Schallemissionsvorrichtung (10, 110) nach einem der vorangehenden Ansprüche,
**dadurch gekennzeichnet, dass**
die Nebenwand (28, 134) und der Umfangsrand (26, 132) stoffschlüssig mit einer angesetzten Abdeckung (120) ausgebildet sind, die an das Gehäuse (12, 112) angebracht ist, um dessen Öffnung (24, 128) zu verschließen.

9. Schallemissionsvorrichtung (10, 110) nach dem vorangehenden Anspruch,
**dadurch gekennzeichnet, dass**
die Nebenwand (28, 134) und der Umfangsrand (26, 132) an der Unterseite der Abdeckung (120) angeordnet sind.

10. Verfahren zum Zusammenfügen einer Schallemissionsvorrichtung zum Ausstatten eines Kraftfahrzeugs nach einem der Ansprüche 1 bis 9, umfassend die nachfolgenden Schritte:
- Anordnen der äußeren Umfangsrandleiste (42, 138) einer akustischen Membran (38, 122) an einen Umfangsrand (26, 132) des Gehäuses (12, 112) der Schallemissionsvorrichtung (10, 110);
- Umbiegen einer im Wesentlichen zylindrischen Nebenwand (28, 134), die stoffschlüssig mit dem Umfangsrand (26, 132) ausgebildet ist, an die äußere Umfangsrandleiste (42, 138) der akustischen Membran (38, 122), so dass sie an den Umfangsrand des Gehäuses (26) geklemmt gehalten wird.

11. Verfahren zum Zusammenfügen nach dem vorangehenden Anspruch, **dadurch gekennzeichnet, dass** der Schritt des Umbiegens durch Warmumbiegen der Nebenwand (28, 134) durch Schwingung über eine Sonotrode (50) erfolgt.

## Claims

1. Sound emitter device (10, 110) intended to equip a motor vehicle, comprising:
- a casing (12, 112) comprising an axial main wall (20, 124) and a back wall (22), the axial wall (20) extending along a vertical axis (A1) from the back wall (22, 126) toward an opening (24, 128) opposite the back wall (22, 126);
- a control circuit (14, 114);
- an acoustic membrane (38, 122) arranged in the opening (24, 128) of the casing (12, 112) and that is provided on its lower face (39, 141) with excitation means (40, 136) controlled by the control circuit (14, 114);
**characterized in that** the casing (12, 112) further comprises:
- a peripheral rim (26, 132) that is arranged in the opening (24, 128), the external peripheral edge (42, 138) of the acoustic membrane (38, 122) being mounted to bear on the peripheral rim (26, 132);
- a secondary wall (28, 134) that is made in one piece with the peripheral rim (26, 132) and is bent toward the peripheral rim (26, 132) so as to retain the acoustic membrane (38, 122) by clamping its external peripheral edge (42, 138) between the peripheral rim (26, 132) and the secondary wall (28, 132).

2. Sound emitter device (10, 110) according to the preceding claim, **characterized in that** the peripheral rim (26, 132) and/or the secondary wall (28, 132) include at least one protuberance (48, 148, 158) bearing against the external peripheral edge (42, 138) of the acoustic membrane (38, 122).

3. Sound emitter device (10, 110) according to the preceding claim, **characterized in that** the peripheral rim (26, 132) and/or the secondary wall (28, 132) include(s) at least one recess (46, 142, 152) of complementary shape to the protuberance (48, 148, 158) so that a part of the external peripheral edge (42, 138) of the acoustic membrane (38, 122) is pressed into the recess (46, 142, 152) by the protuberance (48, 148, 158) .

4. Sound emitter device (10, 110) according to the preceding claim, **characterized in that** the recess (46, 142, 152) and the protuberance (48, 148, 158) are of annular shape and extend all around the perimeter of the secondary wall (28, 134) and the peripheral rim (26, 132).

5. Sound emitter device (10, 110) according to the preceding claim, **characterized in that** the secondary wall (28, 134) and the peripheral rim (26, 132) include a plurality of recesses (46, 142, 152, 154) and a plurality of protuberances (48, 148, 156, 158) having concentric annular shapes.

6. Sound emitter device (10, 110) according to any one of Claims 2 to 5, **characterized in that** the protuberance (48, 148, 156, 158) has in axial section a profile of semicircular or triangular or rectangular shape.

7. Sound emitter device (10, 110) according to any one of Claims 1 to 5, **characterized in that**:
- the surface (150) of the internal peripheral rim (132) has in axial section a profile forming a single step;
- a part of the external peripheral edge (42, 138) of the acoustic membrane (38, 122) is pressed onto the surface of the lower element (163) of the step by the secondary wall (134), the other part of the external peripheral edge (42, 138) of the acoustic membrane (38, 122) is pressed onto the surface of the higher element (163) of the step by the secondary wall (134) .

8. Sound emitter device (10, 110) according to any one of the preceding claims, **characterized in that** the secondary wall (28, 134) and the peripheral rim (26, 132) are made in one piece with an attached cover (120) that is mounted on the casing (12, 112) to close the opening (24, 128) therein.

9. Sound emitter device (10) according to the preceding claim, **characterized in that** the secondary wall (28, 134) and the peripheral rim (26, 132) are arranged on the lower face of the cover (120).

10. Method of assembling a sound emitter device according to any one of Claims 1 to 9 intended to equip a motor vehicle, comprising the steps of:
- disposing the external peripheral edge (42, 138) of an acoustic membrane (38, 122) on a peripheral rim (26, 132) of the casing (12, 112) of the sound emitter device (10, 110);
- bending a substantially cylindrical secondary wall (28, 134) made in one piece with the peripheral rim (26, 132) over the external peripheral edge (42, 138) of the acoustic membrane (38, 122) so as to hold it clamped against the peripheral rim of the casing (26) .

11. Assembly method according to the preceding claim **characterized in that** the bending step is executed by hot bending of the secondary wall (28, 134) by means of vibration by a sonotrode (50).
